# EUROPEAN PATENT APPLICATION

(11) **EP 0 774 389 A1**
(43) Date of publication of application: **21.05.1997**
(21) Application number: 96500148.0
(22) Date of filing: 20.11.1996
(51) Int. Cl.: B60T 7/06, G05G 1/14

(54) **Brake pedal control device for driving school cars**

(30) Priority: 20.11.1995 ES 9502935 U
(71) Applicant: Marin Rodriguez, Francisco José, 28025 Madrid (ES)
(72) Inventor: Marin Rodriguez, Francisco José, 28025 Madrid (ES)
(74) Representative: Del Campo Castel, Domingo

(57) **Abstract**

Brake pedal control device for driving school cars, which consists of a pushing element (1) and (6) formed of a hydraulic piston which is fixed to the floor of the vehicle, whose chamber is connected with the other piston (4) formed as an extra pedal being located the pushing element (1) and (6) under the brake pedal (5), in which the pushing element (6) is the active extreme of a lever articulated with a paracentral point on a support (8) fixed to the floor (2) of the car, and presents in the opposite extreme a widened form.

## Description

### OBJECTIVE OF THE INVENTION

As it is presented in the title of this descriptive statement, this invention consists of a brake control device for driving school cars which can provide remarkable functional benefits to the teacher and also improve road safety as the teacher gains access to the brake to temporarily cancel the erroneous brake action started by the trainee in an incorrect manoeuvre.

As everybody knows, a driving school car has two sets of commands, that means a double set of pedals, one for the trainee and the other for the teacher who sits next to him/her. These pedals are joined by a rigid bar, and so they move simultaneously. When pressing any of the pedals on either side, the effect is transmitted to the corresponding one on the other side.

The objective of this invention is to enable the teacher to act from his side with his set in case of a sudden or reckless brake, by unblocking the brakes and recover the control of the vehicle.

### DESCRIPTION OF THE INVENTION

In general terms, this brake control device for driving school cars consists of a pushing part which is located under the brake pedal on the teacher's side. When it is pressed it moves to prevent the lever from going down as it acts on that of the trainee's allowing the teacher to gain control on the movement. It means an extra pedal located near the proper brake pedal on the teacher's side.

As an example of preferable realization, this control device has a pushing element which consists of a hydraulic piston which is fixed to the floor of the vehicle. The lower chamber of the piston leads to that of the other piston, advantageously bigger in section, becoming the added pedal controlled by th teacher. This other piston is also fixed to the floor of the vehicle. The two pistons can either be mounted on the same support on the floor or remain independent, being joined by a small whip or similar, which connects one hydraulic chamber to the other.

With this layout, the teacher can use the added pedal when necessary, counteracting the action excerted on the brake pedal with a rising pressure to release the brake.

If wanted, instead of having the pushing element actioned hydraulically, the same effect can be achieved with an articulated lever with a paracentral point located under the brake pedal on the teacher's side, joined to a support on the floor, and oscilating as it is crossed by an exle anchored between a couple of lugs of the support. The front extreme of the articulated lever can reach the brake lever, while the rear extreme means the point where the pressure is applied by the teacher's foot, being advantageously widened to become an extra brake pedal.

A sheet with the plans has been attached to this description in order to facilitate the understanding of the features of this invention. The pictures are intended to illustrate, and not to limit the representation of the following:

### BRIEF DESCRIPTION OF THE PICTURE

**Picture 1.-** This is a schematic view of the longitudinal elevation of a hydraulic brake pedal control device for school driving cars, where details have been enlarged to a higher scale.

**Picture 2.-** Similar to picture one, this time the device consists of an articulated lever on a support fixed to the floor of the car, under the brake pedal.

### DESCRIPTION OF THE MECHANISM

Refering to the numbers in the pictures, we can see the different parts this control device consists of. In picture 1 the hydraulic piston fixed to the floor of the vehicle (2) with its lower chamber connected by a small whip or similar (3) to the other piston (4) in the added pedal, controlled by the teacher.

The pushing element of piston (1) is located under the brake lever (5) on the teacher's side. Thus, when the teacher finds it necessary, he can press piston (4) with his foot making piston (1) go up bloching the brake pedal (5), cancelling the action started by the trainee on his own brake pedal.

In picture 2, we can see that the same result can be obtained by setting an articulated lever (6) which swings between two lugs (7) of the support (8) fixed to the floor (2) of the vehicle, under the pedal (5) on the teacher's side. The teacher applies pressure on the pedal (9).

In picture 2, number (10) is a spring or recovering part which helps the articulated lever (6) return to the initial position; however, this is optional and can be omitted.

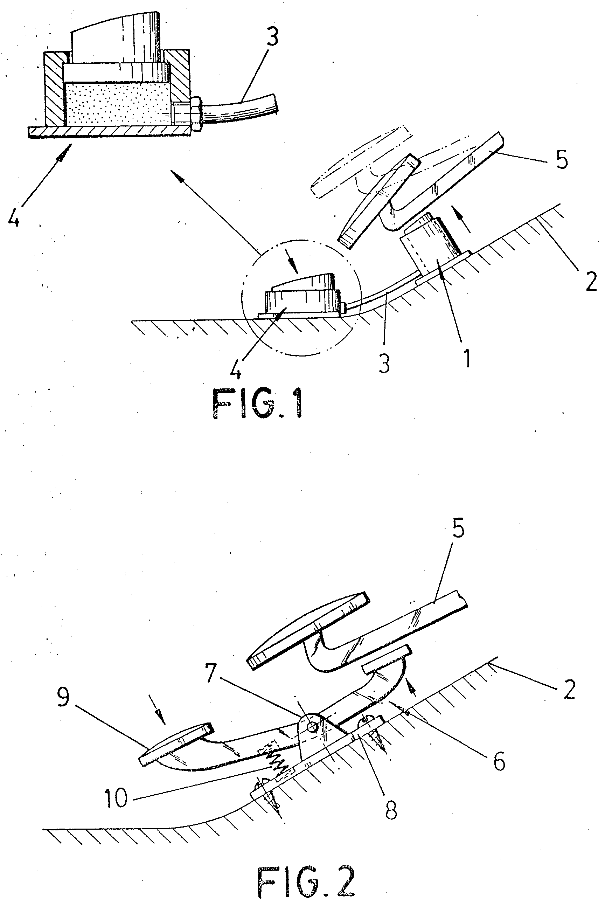

## Claims

1. **BRAKE PEDAL CONTROL DEVICE FOR SCHOOL DRIVING CARS** with a double set of pedals located on both the trainee's and the teacher's side, and with simultaneous movement, intended to allow the teacher to partially or tatally block an erroneous brake action started by the trainee in an incorrect maneouvre. This device has the following features: a pushing element (1,6) located under the brake pedal (5) on the teacher's side, which moves when it is used by the teacher, to press the brake lever (5) preventing it from going down, or controlling the way it goes down.

2. **BRAKE PEDAL CONTROL DEVICE FOR SCHOOL DRIVING CARS,** according to Claim 1, in which the pushing element (1) is a hydraulic piston fixed to the floor (2) of the vehicle, where its chamber leads to another piston (4) making an extra pedal, controlled by the teacher, and located in the closest and most convinient point near the brake pedal (5) solidly fixed to the floor (2) of the vehicle.

3. **BRAKE PEDAL CONTROL DEVICE FOR SCHOOL DRIVING CARS,** according to Claim 1, in which the pushing element (6) is the active extreme of an articulated lever with a paracentral point on a support fixed to the floor of the car, and with the other extreme widened as to mean the point where the pressure is applied by the teacher's foot.
